# EUROPEAN PATENT SPECIFICATION

(11) **EP 3 504 568 B1**
(45) Date of publication and mention of the grant of the patent: **18.02.2026**
(21) Application number: 17764710.4
(22) Date of filing: 24.08.2017
(51) Int. Cl.: G02B 6/036, H01S 3/067

(54) **SPLICE WITH CLADDING MODE LIGHT STRIPPING**
VERBINDUNG MIT MANTEL LICHTMODEN ABZIEHER
CONNEXION AVEC UN SÉPARATEUR DES MODES DE LUMIÈRE DU REVÊTEMENT

(30) Priority: 26.08.2016 US 201662380312 P
(43) Date of publication of application: 03.07.2019
(73) Proprietor: NLIGHT, Inc., Vancouver, WA 98665 (US)
(72) Inventor: RIVERA, Chris, A., Vancouver, WA 98665 (US); KLINER, Dahv, A.V., Vancouver, WA 98665 (US); EMERY, Joseph, Vancouver, WA 98665 (US)
(74) Representative: Dehns
(86) International application number: PCT/US2017/048497
(87) International publication number: WO 2018/039498

(56) References cited:
- US-A1- 2013 087 694
- US-A1- 2014 241 385
- US-A1- 2014 270 637
- US-A1- 2015 043 597
- US-A1- 2015 349 481
- ALEXANDRE WETTER ET AL: "High power cladding light strippers", VISUAL COMMUNICATIONS AND IMAGE PROCESSING; 20-1-2004 - 20-1-2004; SAN JOSE,, vol. 6873, no. 687327, 21 January 2008 (2008-01-21) - 24 January 2008 (2008-01-24), pages 687327 - 1, XP002683205, ISBN: 978-1-62841-730-2, DOI: 10.1117/12.763003

## Description

### FIELD

The disclosure pertains to fiber optic systems for laser beam delivery.

### BACKGROUND

Combining high power laser beams in multimode fibers requires the use of combiners that can withstand exposure to such high powers. Laser beams are typically confined by a fiber core that is surrounded by a glass cladding with a diameter that often exceeds the core diameter by many times (e.g. 100 µm core vs. 660 µm cladding). In order to couple power from input fiber cores to an output fiber, these input fiber cores must be optically coupled. This can be done by etching or tapering of the input fibers. However, one result of etching or tapering these input fibers is increased sensitivity to high beam powers, especially to beam portions that are guided in input fiber claddings. This often occurs due to small amounts of splice loss, modes leaking from the input fiber core, light scattered from the core to the cladding by fiber defects, etc. Beam portions guided by the input fiber cladding and stripped in the combiner produce heating that can lead to failure of the combiner or further increase the combiner's sensitivity to high power exposures. US2014/0270637 discloses a light stripper assembly for dissipating a residual optical pump power carried by a pump light propagating in an optical fiber component.

### SUMMARY

An optical system is provided as claimed in claim 1. In some examples, the cladding light stripping region is secured with a polymer to a thermally conductive support. In other examples, a groove is defined in the thermally conductive support, and the cladding light stripping region is secured in the groove by the adhesive. In some examples, the adhesive is transparent and has a refractive index of between 1.4 and 2.0. In typical examples, the thermally conductive support is metallic. In additional embodiments, a heat transfer plate is in thermal contact with the thermally conductive support. In yet other examples, the fiber optic beam combiner includes a plurality of input fibers, and laser sources are optically coupled to respective laser output fibers that are spliced to corresponding input fibers of the fiber optic beam combiner. Each of the input fibers of the fiber optic beam combiner to which laser output fibers are spliced includes a cladding light stripping region extending optically downstream from the splice.

A method is provided as claimed in claim 6. Methods include directing a beam from a laser beam delivery fiber to a beam combiner input fiber through an optical splice that couples the laser beam delivery fiber and the beam combiner fiber. Cladding light produced at the splice is attenuated with the cladding light stripping region that extends the second distance from the splice along the beam combiner fiber that is embedded in a transparent index matching polymer.

The foregoing and other features, and advantages of the disclosed technology will become more apparent from the following detailed description, which proceeds with reference to the accompanying figures.

### BRIEF DESCRIPTION OF THE DRAWINGS

FIG. 1 illustrates a representative optical system in which signal beams are combined to form a combined beam.
FIG. 2 illustrates another representative optical system that combines signal beams.
FIG. 3A illustrates a procedure for making a cladding light stripper (CLS) that preferentially strips cladding light directed away from a splice.
FIG. 3B illustrates a portion of a CLS formed as illustrated in FIG. 3A.
FIG. 4 illustrates an assembly that retains optical fibers having cladding stripped regions in grooves that can be filled with a material having an index of refraction selected so that cladding light is removed from or attenuated in the optical fibers.
FIG. 5 is a sectional view illustrating an exposed fiber cladding that is encapsulated with a transparent polymer in a groove in a thermally conductive support.
FIG. 6 is a block diagram of a representative method of coupling a laser beam delivery fiber to a beam combiner input fiber so as to attenuate cladding light directed toward the beam combiner.

### DETAILED DESCRIPTION

As used in this application and in the claims, the singular forms "a," "an," and "the" include the plural forms unless the context clearly dictates otherwise. Additionally, the term "includes" means "comprises." Further, the term "coupled" does not exclude the presence of intermediate elements between the coupled items.

### Representative Combined Beam Optical Systems

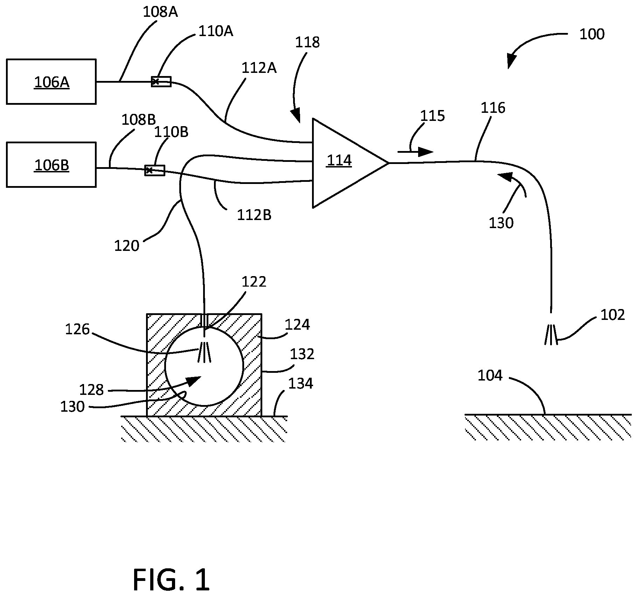

With reference to FIG. 1, a laser system 100 is situated to produce a continuous-wave, quasi continuous-wave, pulsed, or other laser output beam 102 that typically provides average powers of greater than 4 kW. The laser output beam 102 is directed to a target 104, such as a metallic surface, for precision laser cutting, welding, or other applications. The laser system 100 includes laser signal sources 106A, 106B situated to produce and couple signal beams into respective signal fibers 108A, 108B. For example, in the generation of a 6 kW laser output beam, two 3 kW signal beams can propagate through each of the signal fibers 108A, 108B. The signal fibers 108A, 108B are spliced with respective cladding light stripping (CLS) fiber splices 110A, 110B to signal combiner input fibers 112A, 112B of a signal combiner 114. The signal combiner 114 receives and combines the signal beams to form a combined signal beam 115 that is coupled into a combiner output fiber 116. The combiner output fiber 116 emits the combined signal beam 115 as the laser output beam 102. In some embodiments, one or more additional output fibers, such as a delivery fiber, are coupled to the combiner output fiber 116 to deliver the laser output beam 102 to a laser head situated to direct the laser output beam 102 in relation to the target 104. Only two signal input beams are illustrated in FIG. 1, but one, two, three, or more can be used.

The signal combiner input fibers 112A, 112B are coupled to an input end 118 of the signal combiner 114 along with a separate input fiber 120 that is not coupled to a laser signal source. In representative examples, the separate input fiber 120 corresponds to a fiber that could otherwise be used to receive a signal beam. An input end 122 of the separate input fiber 120 is coupled to an interior region of an integrating beam dump 124. During operation of the laser system 100, a separate beam 126 can be formed that is associated with the laser output beam 102 and that propagates in a reverse direction from the laser output beam 102. The integrating beam dump 124 is situated to receive the separate beam 126 and to diffuse the separate beam 126 in an interior integrating volume 128 having one or more curved surfaces 130 so that the optical energy of the separate beam 126 is removed through a thermally conductive housing 132. The excess thermal energy is directed away through an attached conductive housing 134, such as a water-cooled cooling block. In representative examples, 50 W or greater of continuous power is received as the separate beam 126.

In a representative example, during operation, the laser output beam 102 can reflect at surface of the target 104 and cause a portion of the laser output beam 102 to be coupled back into the combiner output fiber 116 so as to form a backward propagating beam 130 that propagates in a direction opposite a direction of propagation of the combined signal beam 115. The backward propagating beam 130 can propagate back through the signal combiner 114 to reach and potentially damage the signal sources 106A, 106B or other components, such as the signal combiner 114. The combiner output fiber 116 or associated delivery fiber can break or fail causing additional resonant cavities to form within the laser system 100, such as between the fiber break and one or more Bragg gratings associated with the signal sources 106A, 106B, so as to produce the backward propagating beam 130. In some examples, the backward propagating beam 130 includes light at the wavelength at or near that of the signal sources 106A, 106B and light at one or more Raman wavelengths that is associated with stimulated Raman scattering (SRS). The separate beam 126 includes at least a portion of the backward propagating beam 130 and the integrating beam dump 124 is situated to remove at least some of the optical energy associated with the backward propagating beam 130. By directing the separate beam 126 to the integrating beam dump, technicians repairing or performing maintenance on the laser system 100 can safely injury from high power laser light reflecting within the interior of the housing of the laser system 100.

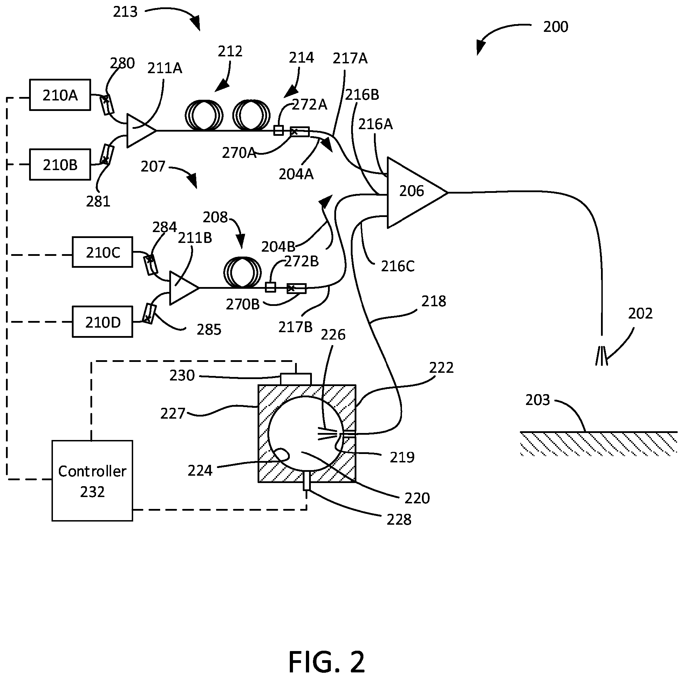

FIG. 2 shows another example of a laser system 200 that can deliver a laser output beam 202 such as a high power output beam to a target 203. The laser output beam 202 can have average power of 1, 2, 5, 10 kW or more or less, and is produced by combining a plurality of signal beams 204A, 204B with a signal combiner 206. The signal beam 204B is produced with a fiber laser system 207 that includes an oscillator 208 coupled to and pumped by diode pump sources 210C, 210D combined with a pump or pump signal combiner 211B. As shown in FIG. 2, the diode pump sources 210C, 210D are coupled to the signal combiner 211B with CLS splices 284, 285. The signal beam 204A is produced with a fiber laser system 213 that includes a master oscillator 212 coupled to one or more fiber power amplifiers 214. As shown in FIG. 2, diode pump sources 210A, 210B are coupled to a signal combiner 211A with CLS splices 280, 281. The signal beams 204A, 204B are coupled to corresponding signal combiner inputs 216A, 216B of the signal combiner 206 through respective input fibers 217A, 217B and associated CLS splices 270A, 270B that connect the signal combiner inputs 216A, 216B to the input fibers 217A, 217B. A separate input 216C of the signal combiner 206 is coupled to a length of fiber 218 having an open end 219 that is coupled to an interior volume 220 of a beam dump 222. The interior volume 220 is typically defined by one or more curved surfaces 224 that are suited for diffusing a reverse-propagating beam 226 associated with the laser output beam 202 that is directed into the interior volume 220 through the open end 219 of the fiber 218. The beam dump 222 is situated to remove the reverse-propagating beam 226 from the laser system 200 by reflecting the reverse-propagating beam 226 multiple times in the interior volume 220 and absorbing the diffused beam with a beam dump conductive housing 227.

A photodetector 228, such as a photodiode, is coupled to the beam dump 222 and in optical communication with the interior volume 220. The photodetector 228 is situated to detect one or more optical characteristics of the reverse-propagating beam 226, such as wavelength or power. A thermal sensor 230, such as a thermistor, is coupled to a conductive housing 227 of the beam dump 222 and is situated to detect a temperature variation of the conductive housing 227 that is associated with the power level and duration of the reverse-propagating beam 226. A controller 232 is situated to receive a signal from the photodetector 228 corresponding to the optical characteristics of the reverse-propagating beam 226 and a signal from the thermal sensor 230 corresponding to a temperature of the conductive housing 227. The controller 232 is further coupled to the diode pump sources 210A, 210B and is situated to change or disconnect power delivered to the diode pump sources 210A, 210B based on the detected characteristics of the reverse-propagating beam 226 and the conductive housing 227 so that the signal beams 204A, 204B can be deenergized. Thus, the beam dump 222 becomes a useful diagnostic tool to monitor and potentially disable one or more components of the laser system 200 based on the detection of the reverse-propagating beam 226.

Additional cladding light strippers such as cladding light strippers 272A, 272B can be provided to remove or attenuate upstream and/or downstream propagating cladding light. These cladding light strippers can be made in a variety of ways. Some examples use an epoxy that surrounds an exposed cladding surface of an optical fiber in which an output beam and cladding light are propagating. In other examples, an optical fiber includes one or more notches or other patterns ("microstructures") penetrating a circumference of an exposed cladding. The notches are operable to disrupt the propagating cladding light by directing the cladding light away from and out of the optical fiber without substantially altering light propagation in the fiber core. The out-coupled cladding light then impacts a surface of a conductive block and is eventually converted to heat to be dissipated through the conductive block. In other examples, silica-based crystals are formed on the cladding surface to scatter the cladding light out of the fiber without substantially altering light propagation in the fiber core

### Representative Cladding Light Strippers

In FIGS. 1-2, cladding light strippers are situated at least partially optically downstream of fiber splices to remove or attenuate cladding light that is generated at a splice. In such optical systems, cladding light is generally not useful for material processing but can contribute undesirable heating or cause other problems. For example, beam combiners that receive multiple high power optical beams can be damaged if cladding light produced by splicing is not removed. In some cases, such cladding light strippers are water cooled to avoid thermal damage and are directional so as to preferentially strip cladding light propagating from a splice in a particular directions such as toward a beam combiner. As discussed below, cladding light strippers can be formed with a cladding light stripping section of optical fiber that is situated downstream (and upstream) of a fiber splice.

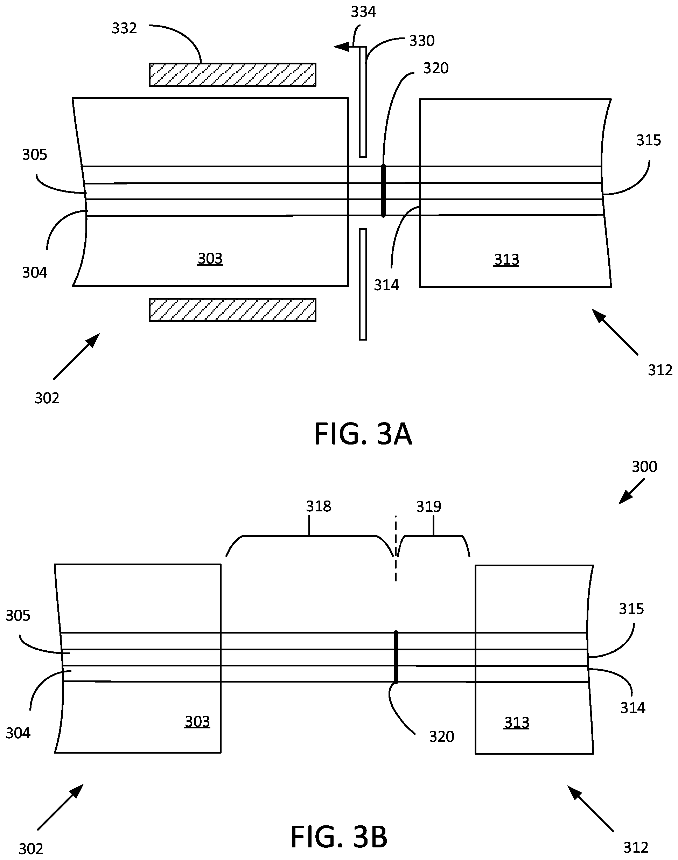

Fabrication of a representative CLS section of an optical fiber is illustrated in FIG. 3A and a resulting CLS fiber assembly 300 is illustrated in FIG. 3B. The optical fiber assembly 300 includes a first fiber 302 and a second fiber 312 that are optically coupled by a splice 320 such as a fusion splice. In typical examples, the splice 320 is formed by fusion splicing or other techniques and then tested using standard splice test criteria. The first fiber 302 and the second fiber 312 typically include respective buffer coatings 303, 313, claddings 304, 314, and cores 305, 315, but in other examples double clad or other fibers are used. The buffer coatings 303, 313 are shown as removed about the splice 320, as typically necessary for splicing. A thermal stripping or other heating element 332 is situated to warm the buffer coating 303 so that motion of the fiber assembly 300 toward a stripper blade 330 removes an additional portion of the cladding to produce a cladding stripping window 318 of the first fiber 302 that is generally longer than a length of a buffer stripped region 319 of the second fiber 312. Typically, cladding stripping windows are between 5 mm and 50 mm, 6 mm and 25 mm, and 7 mm and 10 mm long. In some cases, the cladding stripping window 318 is prepared when the first fiber 302 is prepared for splicing so that buffer coatings are removed along a longer section of the first fiber 302 than the second fiber 312.

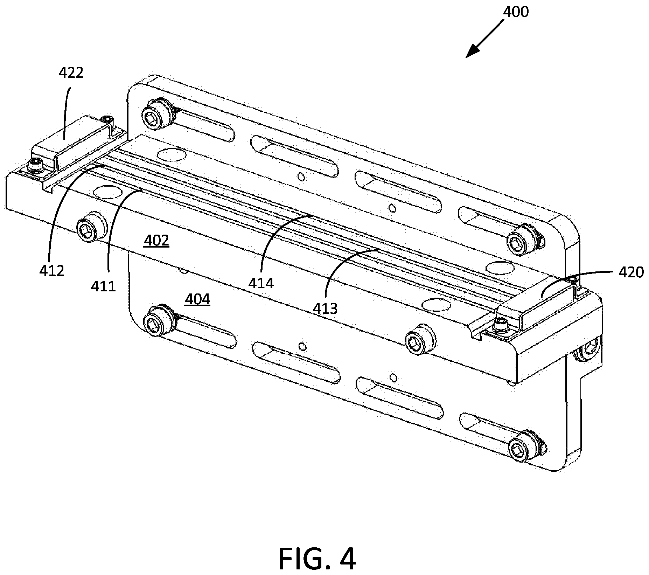

Referring to FIG. 4, a CLS support assembly 400 includes a fiber support 402 that is thermally coupled to a heat transfer plate 404 that can be cooled with air, water, or otherwise cooled as may be convenient. Grooves 411-414 are provided in a surface 418 of the support plate 402. The grooves 411-414 are sized so that a stripped or unstripped fiber can be situated in a groove and secured to the groove with an adhesive having an index of refraction that approximately matching a fiber cladding index of refraction. Such indices of refraction are generally between about 1.3 and 2, and typically between 1.45 and 1.55. Ultraviolet or thermally cured adhesives can be used. A CLS window region as shown in FIG. 3B is typically situated in the groove thus has its cladding index-matched by the adhesive to strip cladding light. It is generally preferred to contact or encapsulate at least the splice between a laser delivery fiber and a beam combiner fiber to provide additional strength. The fiber support 402 and the heat transfer plate 404 are generally formed of a thermally conductive material such as a metal, and can include flow channels for liquid cooling or fins for air cooling. Clamps 420, 422 secure cladding stripped, jacketed, buffer coated, or other fiber portions to the fiber support 402.

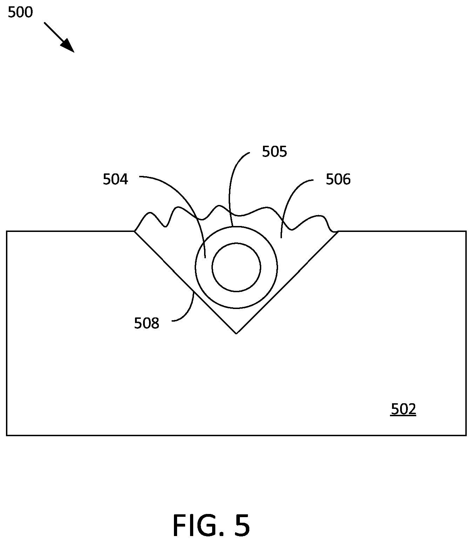

Referring to FIG. 5, a thermally conductive support 502 shown in a sectional view includes a fiber 504 having an exposed cladding surface 505 situated in a v-groove 508 and retained in the v-groove 508 with a polymer 506. Although FIG. 5 shows a v-groove, other angular or curved shapes or combinations of shapes can be used. If desired, a groove can have a stepped-down portion sized to receive the cladding striping regions of fibers, and a larger portion to retain unstripped fibers. The thermally conductive support 502 is shown as a rectangular block, but blocks having curved surfaces such as spherical or elliptical surfaces or polygonal shapes can also be used. Thermally conductive materials such as metals are convenient.

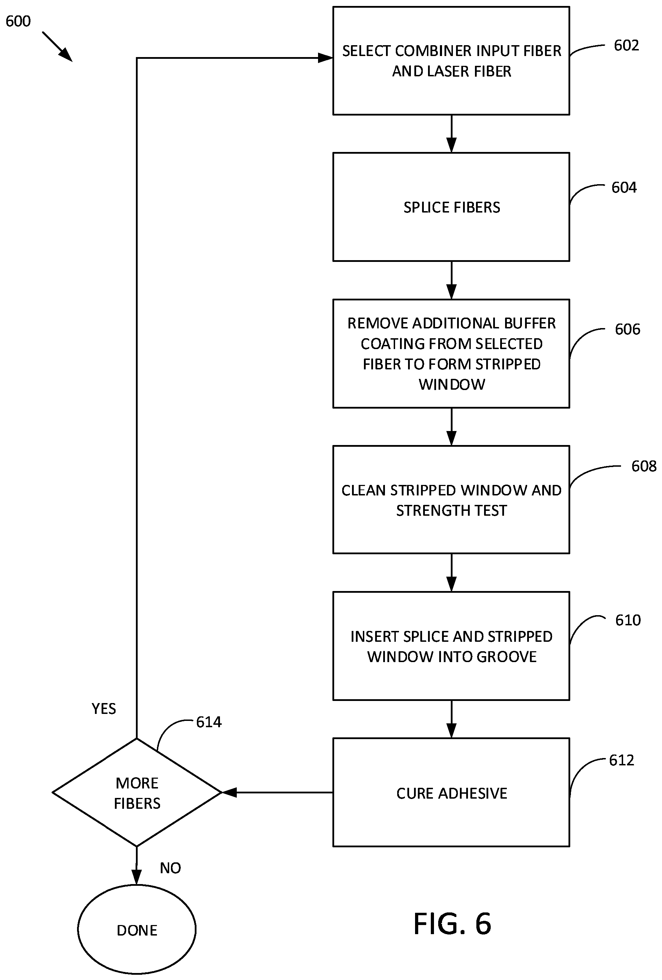

FIG. 6 illustrates a representative method 600 of making a CLS window. At 602, a laser output fiber and a combiner input fiber are selected. At 604, these fibers are spliced by fusion splicing or otherwise, and at 606, the splice is then inserted into a thermally aided buffer stripping device such that the stripped blade avoids contact with the splice but can remove all buffer material over a region of 7-10 mm or more optically downstream of the splice. In some examples, an optically upstream (and/or downstream) fiber with respect to the splice is provided with a longer cladding light stripping region, i.e., a longer fiber length having an exposed cladding surface. At 608, the window stripped region is wiped using a piece of lens paper soaked in isopropyl alcohol to remove excess buffer fragments and the splice tested for longitudinal strength in a linear pull proof test tool. At 610, the splice and cladding stripped window are placed in a groove and secured with an index-matched polymer material that fills the groove. The polymer material is cured or otherwise hardened at 612 via UV irradiation, heat, or otherwise. The splice and CLS window can be further tested for thermal performance by enabling an input laser and measuring heating as a function of power to determine the maximum power handling of the composite optical configuration. At 614, it is determined if additional lasers and/or fiber inputs are to be processed. If so, the method 600 returns to 602.

Large power loads can be accommodated using a graded index polymer CLS such as described in U.S. Patent 8,537,871. The refractive index of the adhesive or polymer securing the CLS window can be varied so that cladding light can be extracted at a preferred rate along the length of the CLS window. Similarly, an adhesive or polymer having a common index of refraction can be applied in an narrow portions near a splice followed by increasingly wider portions downstream of the splice. Removal of forward going cladding light and splice protection are generally the objectives in the disclosed examples, but protection from reverse-going cladding light based on light returning from a workpiece and can also be provided. The reverse going cladding stripped light (as well as the forward going cladding stripped light) could also be detected via photodiode or thermal sensing and be used for diagnostic purposes.

In some examples, CLS stripped and unstripped fiber portions are secured to a thermally conductive support with a polymer, and optically downstream CLS portions are longer or are otherwise situated to attenuate cladding light propagating toward beam combiners or other components. Fiber portions may or may not be fully encapsulated in a groove and may extend out of the groove, depending on, for example, groove depth. While the examples generally pertain to splices to beam combiners, the disclosed approaches can be generally used at any fiber splice.

## Claims

1. An optical system (100), comprising:
a fiber optic beam combiner (114, 206) that includes a plurality of input fibers (112A, 112B, 217A, 217B); and
a laser source (106A, 106B) optically coupled to a laser output fiber (108A, 108B) that is spliced to a first input fiber (112A, 112B, 217A, 217B) of the fiber optic beam combiner (114, 206), wherein the first input fiber (112A, 112B, 217A, 217B) of the fiber optic beam combiner (114, 206) includes a cladding light stripping region situated optically downstream of the splice and wherein the laser output fiber (108A, 108B) includes a cladding light stripping region that is shorter than the cladding light stripping region of the first input fiber (112A, 112B, 217A, 217B) of the fiber optic beam combiner (114, 206); and
a beam dump (124, 222) coupled to a second input fiber (120) to receive a backward propagating beam (126, 226) from the fiber optic beam combiner that is associated with the laser output beam (102) from the fiber optical beam combiner (114, 206).

2. The optical system (100) of claim 1, further comprising a thermally conductive support (402), wherein the cladding light stripping regions are secured to the thermally conductive support (402) by an adhesive that contacts the cladding light stripping region; optionally,
further comprising a groove (411, 412, 413, 414) defined in the thermally conductive support (402), wherein the cladding light stripping regions are secured in the groove (411, 412, 413, 414) by an adhesive; optionally,
wherein the adhesive is transparent and has a refractive index of between 1.4 and 2.0.

3. The optical system (100) of claim 2, wherein the thermally conductive support (402) is metallic.

4. The optical system (100) of claim 2 or 3, further comprising a heat transfer plate (404) in thermal contact with the thermally conductive support (402).

5. The optical system (100) of any of claims 1-4, further comprising corresponding laser sources (106A, 106B) optically coupled to respective laser output fibers (108A, 108B) that are spliced to corresponding input fibers (112A, 112B, 217A, 217B) of the plurality of input fibers (112A, 112B, 217A, 217B) of fiber optic beam combiner (114), wherein the input fibers (112A, 112B, 217A, 217B) of the fiber-optic beam combiner (114) optically coupled to the laser sources include cladding light stripping regions extending optically downstream from the splice.

6. The optical system of claim 1, further comprising a photodetector (228) situated to detect one or more optical characteristics of the backward propagating beam (126, 226).

7. A method, comprising:
directing a beam from a laser beam delivery fiber (108A, 108B) to a first beam combiner input fiber (112A, 112B, 217A, 217B) of a plurality of input fibers (112A, 112B, 217A, 217B) of a fiber optic beam combiner (114, 206) through an optical splice (110A, 110B, 270A, 270B) that couples the first laser beam delivery fiber (108A, 108B) and the first beam combiner input fiber (112A, 112B, 217A, 217B), wherein the optical splice includes a cladding light stripping region that extends a first distance from the splice along the first laser beam delivery fiber and a second distance from the splice along the beam combiner fiber, wherein the first distance is less than the second distance; and
attenuating cladding light produced at the splice with the cladding light stripping region that extends the second distance from the splice along the beam combiner fiber that is embedded in a transparent index matching polymer; and
receiving, by a beam dump coupled to a second input fiber, a backward propagating beam from the fiber optic beam combiner (114, 206) that is associated with the laser output beam (102) from the fiber optical beam combiner (114, 206).

8. The method of claim 7, further comprising detecting beam portions propagating from the beam combiner in a second beam combiner input fiber, wherein the detected beam portions and the beam from the laser beam delivery fiber counter-propagate at the beam combiner.

## Patentansprüche

1. Optisches System (100), umfassend:
einen faseroptischen Strahlkombinierer (114, 206), der eine Vielzahl von Eingangsfasern (112A, 112B, 217A, 217B) einschließt; und
eine Laserquelle (106A, 106B), die optisch mit einer Laserausgangsfaser (108A, 108B) gekoppelt ist, die mit einer ersten Eingangsfaser (112A, 112B, 217A, 217B) des faseroptischen Strahlkombinierers (114, 206) verbunden ist, wobei die erste Eingangsfaser (112A, 112B, 217A, 217B) des faseroptischen Strahlkombinierers (114, 206) einen Mantellichtabstreifbereich einschließt, der optisch stromabwärts des Spleißes angeordnet ist, und wobei die Laserausgangsfaser (108A, 108B) einen Mantellichtabstreifbereich einschließt, der kürzer als der Mantellichtabstreifbereich der ersten Eingangsfaser (112A, 112B, 217A, 217B) des faseroptischen Strahlkombinierers (114, 206) ist; und
eine Strahlfalle (124, 222), die an eine zweite Eingangsfaser (120) gekoppelt ist, um einen sich rückwärts ausbreitenden Strahl (126, 226) von dem faseroptischen Strahlkombinierer zu empfangen, der dem Laserausgangsstrahl (102) von dem faseroptischen Strahlkombinierer (114, 206) zugeordnet ist.

2. Optisches System (100) nach Anspruch 1, weiter umfassend einen wärmeleitenden Träger (402), wobei die Mantellichtabstreifbereiche durch einen Klebstoff, der den Mantellichtabstreifbereich kontaktiert, an dem wärmeleitenden Träger (402) befestigt sind; optional,
weiter umfassend eine Nut (411, 412, 413, 414), die in dem wärmeleitenden Träger (402) definiert ist, wobei die Mantellichtabstreifbereiche durch einen Klebstoff in der Nut (411, 412, 413, 414) gesichert sind; optional,
wobei der Klebstoff transparent ist und einen Brechungsindex zwischen 1,4 und 2,0 aufweist.

3. Optisches System (100) nach Anspruch 2, wobei der wärmeleitende Träger (402) metallisch ist.

4. Optisches System (100) nach Anspruch 2 oder 3, weiter umfassend eine Wärmeübertragungsplatte (404) in Wärmekontakt mit dem wärmeleitenden Träger (402).

5. Optisches System (100) nach einem der Ansprüche 1-4, weiter umfassend entsprechende Laserquellen (106A, 106B), die optisch mit jeweiligen Laserausgangsfasern (108A, 108B) gekoppelt sind, die mit entsprechenden Eingangsfasern (112A, 112B, 217A, 217B) der Vielzahl von Eingangsfasern (112A, 112B, 217A, 217B) des faseroptischen Strahlkombinierers (114) verbunden sind, wobei die Eingangsfasern (112A, 112B, 217A, 217B) des faseroptischen Strahlkombinierers (114), die optisch mit den Laserquellen gekoppelt sind, Mantellichtabstreifbereiche einschließen, die sich optisch stromabwärts von der Spleißstelle erstrecken.

6. Optisches System nach Anspruch 1, weiter umfassend einen Photodetektor (228), der angeordnet ist, um eine oder mehrere optische Eigenschaften des sich rückwärts ausbreitenden Strahls (126, 226) zu erfassen.

7. Verfahren, umfassend:
Leiten eines Strahls von einer Laserstrahlabgabefaser (108A, 108B) zu einer ersten Strahlkombinierer-Eingangsfaser (112A, 112B, 217A, 217B) einer Vielzahl von Eingangsfasern (112A, 112B, 217A, 217B) eines faseroptischen Strahlkombinierers (114, 206) durch einen optischen Spleiß (110A, 110B, 270A, 270B), der die erste Laserstrahlabgabefaser (108A, 108B) und die erste Strahlkombinierer-Eingangsfaser (112A, 112B, 217A, 217B) verbindet, wobei der optische Spleiß einen Mantellichtabstreifbereich einschließt, der sich einen ersten Abstand von dem Spleiß entlang der ersten Laserstrahlabgabefaser und einen zweiten Abstand von dem Spleiß entlang der Strahlkombiniererfaser erstreckt, wobei der erste Abstand kleiner als der zweite Abstand ist; und
Abschwächen von Mantellicht, das an der Spleißstelle mit dem Mantellichtabstreifbereich erzeugt wird, der sich in der zweiten Entfernung von der Spleißstelle entlang der Strahlkombinierfaser erstreckt, die in ein transparentes Indexanpassungspolymer eingebettet ist; und
Empfangen eines sich rückwärts ausbreitenden Strahls von dem faseroptischen Strahlkombinierer (114, 206), der mit dem Laserausgangsstrahl (102) von dem faseroptischen Strahlkombinierer (114, 206) assoziiert ist, durch eine Strahlfalle, die an eine zweite Eingangsfaser gekoppelt ist.

8. Verfahren nach Anspruch 7, weiter umfassend das Erfassen von Strahlabschnitten, die sich von dem Strahlkombinierer in einer zweiten Strahlkombinierer-Eingangsfaser ausbreiten, wobei sich die erfassten Strahlabschnitte und der Strahl von der Laserstrahlabgabefaser an dem Strahlkombinierer gegenläufig ausbreiten.

## Revendications

1. Système optique (100), comprenant :
un combineur (114, 206) de faisceaux de fibres optiques qui inclut une pluralité de fibres d'entrée (112A, 112B, 217A, 217B) ; et
une source laser (106A, 106B) couplée optiquement à une fibre de sortie laser (108A, 108B) qui est épissée à une première fibre d'entrée (112A, 112B, 217A, 217B) du combineur (114, 206) de faisceaux de fibres optiques, dans lequel la première fibre d'entrée (112A, 112B, 217A, 217B) du combineur (114, 206) de faisceaux de fibres optiques inclut une région de suppression de lumière de gaine située optiquement en aval de l'épissure et dans lequel la fibre de sortie laser (108A, 108B) inclut une région de suppression de lumière de gaine qui est plus courte que la région de suppression de lumière de gaine de la première fibre d'entrée (112A, 112B, 217A, 217B) du combineur (114, 206) de faisceaux de fibres optiques ; et
une décharge (124, 222) de faisceau couplée à une seconde fibre d'entrée (120) pour recevoir un faisceau de propagation vers l'arrière (126, 226) à partir du combineur de faisceaux de fibres optiques qui est associé au faisceau de sortie laser (102) à partir du combineur (114, 206) de faisceaux de fibres optiques.

2. Système optique (100) selon la revendication 1, comprenant en outre un support thermoconducteur (402), dans lequel les régions de suppression de lumière de gaine sont fixées au support thermoconducteur (402) par un adhésif qui entre en contact avec la région de suppression de lumière de gaine ; facultativement,
comprenant en outre une rainure (411, 412, 413, 414) définie dans le support thermoconducteur (402), dans lequel les régions de suppression de lumière de gaine sont fixées dans la rainure (411, 412, 413, 414) par un adhésif ; facultativement,
dans lequel l'adhésif est transparent et présente un indice de réfraction compris entre 1,4 et 2,0.

3. Système optique (100) selon la revendication 2, dans lequel le support thermoconducteur (402) est métallique.

4. Système optique (100) selon la revendication 2 ou la revendication 3, comprenant en outre une plaque de transfert thermique (404) en contact thermique avec le support thermoconducteur (402).

5. Système optique (100) selon l'une quelconque des revendications 1 à 4, comprenant en outre des sources laser (106A, 106B) correspondantes couplées optiquement à des fibres de sortie laser (108A, 108B) respectives qui sont épissées à des fibres d'entrée (112A, 112B, 217A, 217B) correspondantes de la pluralité de fibres d'entrée (112A, 112B, 217A, 217B) d'un combineur (114) de faisceaux de fibres optiques, dans lequel les fibres d'entrée (112A, 112B, 217A, 217B) du combineur (114) de faisceaux de fibres optiques couplé optiquement aux sources laser incluent des régions de suppression de lumière de gaine s'étendant optiquement en aval de l'épissure.

6. Système optique selon la revendication 1, comprenant en outre un photodétecteur (228) situé pour détecter une ou plusieurs caractéristiques optiques du faisceau de propagation vers l'arrière (126, 226).

7. Procédé, comprenant :
l'orientation d'un faisceau à partir d'une fibre (108A, 108B) de délivrance de faisceau laser vers une première fibre d'entrée (112A, 112B, 217A, 217B) de combineur de faisceaux d'une pluralité de fibres d'entrée (112A, 112B, 217A, 217B) d'un combineur (114, 206) de faisceaux de fibres optiques à travers une épissure optique (110A, 110B, 270A, 270B) qui couple la première fibre (108A, 108B) de délivrance de faisceau laser et la première fibre d'entrée (112A, 112B, 217A, 217B) de combineur de faisceaux, dans lequel l'épissure optique inclut une région de suppression de lumière de gaine qui s'étend sur une première distance à partir de l'épissure le long de la première fibre de délivrance de faisceau laser et une seconde distance à partir de l'épissure le long de la fibre de combineur de faisceaux, dans lequel la première distance est inférieure à la seconde distance ; et
l'atténuation de la lumière de gaine produite au niveau de l'épissure avec la région de suppression de lumière de gaine qui s'étend sur la seconde distance à partir de l'épissure le long de la fibre de combineur de faisceaux qui est intégrée dans un polymère adaptateur d'indice transparent ; et
la réception, par une décharge de faisceau couplée à une seconde fibre d'entrée, d'un faisceau de propagation vers l'arrière à partir du combineur (114, 206) de faisceaux de fibres optiques qui est associé au faisceau de sortie laser (102) à partir du combineur (114, 206) de faisceaux de fibres optiques.

8. Procédé selon la revendication 7, comprenant en outre la détection de portions de faisceau se propageant à partir du combineur de faisceaux dans une seconde fibre d'entrée de combineur de faisceaux, dans lequel les portions de faisceaux détectées et le faisceau provenant de la fibre de délivrance de faisceaux laser se contre-propagent au niveau du combineur de faisceaux.
